# EUROPÄISCHE PATENTSCHRIFT

(11) **EP 1 046 493 B1**
(45) Veröffentlichungstag und Bekanntmachung des Hinweises auf die Patenterteilung: **27.09.2006**
(21) Anmeldenummer: 00250124.5
(22) Anmeldetag: 17.04.2000
(51) Int. Cl.: B32B 17/10, C03C 27/12

(54) **Verfahren zur Herstellung von gebogenem Verbundglas**
Process for making a curved laminated glass
Procédé pour la fabrication de verre laminé étant bombé

(30) Priorität: 19.04.1999 DE 19917426
(43) Veröffentlichungstag der Anmeldung: 25.10.2000
(73) Patentinhaber: Weidemann Unternehmensgruppe Glas, 30890 Barsinghausen (DE)
(72) Erfinder: Holtmann, Klaus, Dr., 30179 Hannover (DE); Weinfurtner, Hans, 92533 Wernberg-Köblitz (DE)
(74) Vertreter: Seewald, Jürgen

(56) Entgegenhaltungen:
- WO-A-98/01649
- FR-A- 2 676 049

## Beschreibung

Die vorliegende Erfindung betrifft ein Verfahren zur Herstellung von bleibend gebogenem Verbundglas, bestehend aus mindestens zwei Glasscheiben, wobei diese voneinander beabstandet werden und der dadurch gebildete Zwischenraum mit einem flüssigen, transparenten Kunststoff als Verbindungsschicht ausgefüllt wird und anschließend eine Aushärtung des Kunststoffes erfolgt.

Nach dem Stand der Technik ist eine bleibende Verformung von Glas durch Biegen nur bei hohen Temperaturen oberhalb von 600° C möglich. Dabei erfolgt die Krümmung der Glasscheiben im Biegeofen entweder auf entsprechenden Schablonen, die für jeden einzelnen Krümmungsradius neu zu fertigen sind, oder aber im sogenannten Aufhängeverfahren mit Klammern senkrecht im Biegeofen. Bei letzterer Verfahrensweise entstehen in nachteiliger Weise sogenannte Aufhängepunkte. Generell neigen vor allem große Scheiben dazu, eine Welligkeit auf der Oberfläche auszubilden, die natürlich optisch störend wirkt.

Auch für Verbundglas bestimmte Glasscheiben werden in der oben genannten Weise im Biegeofen auf den gewünschten Radius gebogen. Je nach dem, wie die Scheiben gekühlt werden, sind die gebogenen Scheiben spannungsfrei (z.B. Windschutzscheiben) oder haben eine Druckspannung in der Oberfläche (Einscheibensicherheitsglas [ESG]). Nach dem Abkühlen werden die Glasscheiben durch Abstandshalter im wesentlich parallel zueinander beabstandet, die Ränder abgedichtet und durch eine verbleibende Einfüllöffnung wird dann ein flüssiger, transparenter Kunststoff eingefüllt und anschließend ausgehärtet. Derartige Verbundglasscheiben werden vor allem im Schalldämmungsbereich eingesetzt. Wenn es nur auf die Erhöhung der Resttragfähigkeit ankommt, ist der Einsatz von Sicherheitsfolien aus Polyvinylbutyral (PVB) als Zwischenschicht üblich. Nach dem Einbringen der Folie muß dann allerdings das Verbundglas noch gewalzt und zur Beseitigung von Luftblasen zwischen Folie und Glas in einem Autoklaven gelagert werden. Die minimale Dicke derartig hergestellter Verbundgläser beträgt ca. 4 mm.

Die bekannten Verfahren zur Herstellung von bleibend gebogenem Verbundglas sind sehr aufwendig und energieintensiv.

In der DE 195 19 504 A1 ist ein Verfahren zum Herstellen gebogener Verbundglasscheiben beschrieben, die aus wenigstens zwei thermisch vorgespannten Glasscheiben bestehen. Auf mindestens einer dieser Glasscheiben wird eine Verbindungsschicht als Zwischenlage zwischen den Glasscheiben aufgebracht. Anschließend wird dann dieses Sandwich in einer Spanneinheit gebogen und unter Beibehaltung dieser Biegung in einem Autoklaven unter Druck erhitzt. Die Temperatur liegt dabei bei etwa 130°C, wobei ein Druck von über 10 bar aufrechterhalten wird. Nach dieser Druck-Wärmebehandlung erfolgt ein langsames Abkühlen der in der Spanneinrichtung verbleibenden Glaseinheit bis auf Raumtemperatur. Wenn diese erreicht ist, kann die Glaseinheit aus der Spanneinrichtung entnommen werden. Eine derart behandelte Verbundglasscheibe soll die gewünschte Form beibehalten.

Die Verbindungsschicht zwischen den Glasscheiben kann gemäß DE 195 19 504 A1 eine Folie aus Polyvinylbutyral oder Polyurethan oder aber auch ein Gießharz wie Acrylat oder dergl. sein. Es ist bekannt, daß bei derartigen Zwischenschichten sich die Verformung der Verbundglasscheiben bei Temperaturen oberhalb 40°C, wie sie im Einsatz der Verbundglasscheiben vorkommen können, wieder zurückbildet, also nicht dauerhaft ist. Eine nicht nur temporäre Aufrechterhaltung der Verformung einer gemäß DE 195 19 504 A1 hergestellten Verbundglasscheibe ist daher nur möglich, wenn diese Glaseinheit am Montageort unter Spannung eingebaut wird.

Eine derartige Fixierung erfordert auch eine gebogene Verbundglasscheibe, die in der FR 26767049 A offenbart ist. Hier kommt als Verbindungsschicht zwischen den Glasscheiben ebenfalls Polyvinylbutyral zum Einsatz oder aber es werden Silikatkörner verwendet, wie sie von Feuerschutzverglasungen her bekannt sind. In beiden Fällen erfolgt eine Überdruck- bzw. Unterdruckbehandlung bei Temperaturen um 100° C. Diese Druck- und Temperaturbehandlungen sind sehr aufwendig.

Aufgabe der vorliegenden Erfindung ist es daher, ein weniger aufwendiges Verfahren zur Herstellung von bleibend gebogenem Verbundglas zur Verfügung zu stellen, mit dem zudem ein Verbundglas mit großen anwendungstechnischen Vorteilen fertigbar ist.

Gelöst wird diese Aufgabe mit einem gattungsgemäßen Verfahren dadurch, daß die Glasscheiben kalt gebogen werden und der verwendete Kunststoff im ausgehärteten Zustand schubfest ist und eine höhere Haftung am Glas als die auftretenden Scherkräfte aufweist.

Eine aufwendige thermische Behandlung der Glasscheiben kommt bei diesem Verfahren also völlig zum Wegfall. Die Durchbiegung des Glases wird dadurch erreicht, daß man die Scheiben im kalten Zustand durch mechanische Belastung biegt. Diese mechanische Belastung ist auf die kalten Glasscheiben auf einfache Weise aufbringbar, so daß dieses Verfahren nicht nur energetisch wesentlich günstiger, sondern auch weitaus weniger aufwendig als die aus dem Stand der Technik bekannten Verfahren ist.

Durch das Biegen werden elastische Rückstellkräfte in den Glasscheiben aufgebaut, die, wenn die Verformung beibehalten werden soll, kompensiert werden müssen. Dies geschieht durch den Kunststoff, der im flüssigen Zustand durch viskoses Fließen keine Spannungen aufbaut und nach seinem Aushärten spannungsfrei ist. Wichtig ist, daß der Kunststoff im ausgehärteten Zustand kein viskoses Fließen zeigt und daß seine Haftung auf dem Glas größer ist als die auftretenden Scherkräfte. Ein geeigneter Kunststoff hat daher einen hohen Schubmodul und einen hohen Elastizitätsmodul. Er friert gewissermaßen den Verformungszustand der Glasscheiben ein. Entscheidend ist dabei der starre Verbund zwischen Kunststoff und Glas. Als Kunststoff kann ein geeignetes Gießharz verwendet werden.

Nach diesem Verfahren hergestelltes Verbundglas eignet sich in hervorragender Weise für die sogenannte Überkopfverglasung. Es ist bekannt, daß sich Glas bei entsprechender Spannweite schon durch sein Eigengewicht durchbiegt. Hinzu kommen noch Klimalasten, Windsog, Winddruck, Schnee- und Sonderlasten. Diese Durchbiegung muß baurechtlichen Anforderungen genügen. Das hat wegen der einzuhaltenden zulässigen Biegezugspannung und Durchbiegungsbegrenzung zu extremen Glasdicken und damit zu aufwendigen Unterkonstruktionen geführt. Mit dem erfindungsgemäßen Verfahren kann die Durchbiegung des Glases gewissermaßen schon vorweggenommen werden, in dem die Glasscheiben soweit durchgebogen werden, wie die aus seinem Eigengewicht und ggf. den veranschlagten Klimalasten resultierende Durchbiegung und diese Durchbiegung anschließend eingefroren wird. Baut man nun diese Verbundglasscheibe mit der Wölbung nach oben ein, wird die eingefrorene Vorspannung durch das Eigengewicht der Scheibe abgebaut, so daß die Scheibe in Einbaulage dann im wesentlichen plan ist. Man kann dadurch wesentlich dünnere Glasscheiben verwenden. Die daraus resultierende Gewichtsersparnis führt darüber hinaus zu weit weniger aufwendigen Unterkonstruktionen.

In weiterer Ausgestaltung der Erfindung werden die Glasscheiben bis in den Bereich der Membranspannungen gebogen. In dem Bereich der Membranspannungen gelangt man, wenn die Durchbiegung der Glasscheiben größer ist als ihre Dicke. In diesem Bereich verteilt sich die gesamte Zugspannung über die Scheibendicke und konzentriert sich nicht mehr auf deren Oberfläche. Die Zugspannungen fallen daher deutlich ab. Dieser Effekt ist als Schalen- oder Membraneffekt bekannt. Er führt hier zu höheren Festigkeitswerten des Verbundglases.

Die Biegbarkeit von Glasscheiben ist stark von deren Dicke abhängig. Je dünner die Glasscheibe ist, desto besser ist die Biegbarkeit, da man schon bei sehr kleinen Durchbiegungen in den Bereich der Membranspannungen kommt. Zudem nimmt die elastisch gespeicherte Enegie in der verformten Glasscheibe bei geringen Glasdicken ab. Setzt man derartig dünne Glasscheiben von z. B. 1 mm bei dem erfindungsgemäßen Verfahren ein, so können damit Scheiben hergestellt werden, die bisher nie mit thermisch gebogenem Flachglas oder ESG machbar waren. Hier ergeben sich insbesondere völlig neue Anwendungsmöglichkeiten für Glas im Bereich der Architektur. Da ESG erst ab einer Dicke von ca. 3 mm reproduzierbar herzustellen ist, ergeben sich auch in diesem Fall Gewichtseinsparungen.

Bei Verbundglas, welches aus mehr als zwei Glasscheiben besteht, ist in vorteilhafter Weise mindestens ein Zwischenraum mit einem im ausgehärteten Zustand zähen Kunststoff gefüllt, der die Splitterbindung sichert. Durch diese Sandwichbauweise wird die Resttragfähigkeit des Verbundglases erhöht.

Von Vorteil ist es auch, wenn mindestens eine der Glasscheiben anstelle von Floatglas aus Einscheibensicherheitsglas oder chemisch vorgespanntem Glas besteht. Diese Gläser weisen auf ihren Oberflächen Druckspannungen auf, die beim Kaltbiegen der Glasscheiben erst einmal überwunden werden müssen, ehe man in den Bereich der problematischen Zugspannungen gelangt. Diese Gläser können also stärker gebogen werden als unbehandeltes Glas.

Zur Armierung des Verbundglases kann vorgesehen werden, in die Kunststoffschicht verstärkende Fasern, z. B. Glasfasern einzulegen.

Das erfindungsgemäße Verfahren wird nachstehend anhand eines Ausführungsbeispieles erläutert. Zwei Scheiben aus Kalk-Natron- und/oder Borosilikatglas werden durch einen elastoplastischen Abstandshalter TPS separiert, der gleichzeitig auch die Abdichtung des Randspaltes zwischen den Glasscheiben übernimmt. In diesem umlaufenden elastoplastischen Abstandshalter ist eine Einfüllöffnung für den flüssigen Kunststoff freigelassen. Durch diese Einfüllöffnung wird der Kunststoff in den Scheibenzwischenraum eingefüllt. Dieses Befüllen kann horizontal oder auch vertikal oder in Schräglage der Scheiben erfolgen. Beim Befüllen ist darauf zu achten, daß die Luft vollständig aus dem Scheibenzwischenraum entweichen kann und der Scheibenzwischenraum vollständig mit Kunststoff gefüllt ist. Nach dem Befüllen wird die Einfüllöffnung mit dem elastoplastischen Abstandshalter verschlossen. Anschließend wird der Scheibenverbund im Bereich der Verformbarkeit gebogen. Dabei paßt sich der elastoplastische Abstandshalter ohne Aufbau von Scherspannungen der Verformung an. Das Biegen geschieht mittels einer Schablone oder durch das Eigengewicht der Scheiben und durch mechanische Belastung. Anschließend wird der Kunststoff ausgehärtet. Das geschieht je nach Art des Kunststoffes durch Abkühlen, Erwärmen oder aber durch hochenergetische Strahlung. Nach dem Aushärten ist der Kunststoff faktisch so starr wie ein Acrylglas, Polycarbonat oder ein ähnlicher transparenter Kunststoff.

Bei der oben beschriebenen Verfahrensweise wurde der Kunststoff vor dem Verformen der Glasscheiben eingebracht. Ebenso gut ist es möglich, zunächst die Glasscheiben zu biegen und anschließend den Kunststoff einzubringen.

## Patentansprüche

1. Verfahren zur Herstellung von bleibend gebogenem Verbundglas, bestehend aus mindestens zwei Glasscheiben, wobei diese voneinander beabstandet werden und der **dadurch** gebildete Zwischenraum mit einem flüssigen, transparenten Kunststoff als Verbindungsschicht ausgefüllt wird und anschließend eine Aushärtung des Kunststoffs erfolgt, **dadurch gekennzeichnet, daß** die Glasscheiben kalt gebogen werden und der verwendete Kunststoff im ausgehärteten Zustand schubfest ist und eine höhere Haftung am Glas als die auftretenden Scherkräfte aufweist.

2. Verfahren nach Anspruch 1, **dadurch gekennzeichnet, daß** die Glasscheiben bis in den Bereich der Membranspannungen gebogen werden.

3. Verfahren nach Anspruch 1 oder Anspruch 2, **dadurch gekennzeichnet, daß** das Auffüllen des Zwischenraums zwischen den Glasscheiben mit dem Kunststoff vor oder nach dem Kaltbiegen erfolgt.

4. Verfahren nach einem der vorstehenden Ansprüche, **dadurch gekennzeichnet, daß** der verwendete Kunststoff ein Gießharz ist.

5. Verfahren nach einem der vorstehenden Ansprüche, **dadurch gekennzeichnet, daß** in die Kunststoffschicht Verstärkungsfasern eingelegt werden.

6. Verfahren nach einem der vorstehenden Ansprüche, **dadurch gekennzeichnet, daß** für die Glasscheiben Einscheibensicherheitsglas oder chemisch vorgespanntes Glas verwendet wird.

7. Verfahren nach einem der vorstehenden Ansprüche, **dadurch gekennzeichnet, daß** bei Verbundglas aus mehr als zwei Glasscheiben mindestens ein Zwischenraum mit einem im ausgehärteten Zustand zähen Kunststoff gefüllt wird.

8. Verfahren nach einem der vorstehenden Ansprüche, **dadurch gekennzeichnet, daß** die mindestens zwei Glasscheiben durch einen elastoplastischen Abstandshalter (TPS) voneinander separiert sind.

## Claims

1. Process for the production of permanently bent laminated glass consisting of at least two glass panes, the latter being separated from one another and the gap formed being filled with a liquid transparent plastic as a bonding layer, the plastic then being cured, **characterized in that** the glass panes are bent cold and, in the cured state, the plastic used is resistart to shear and its adhesion to the glass is greater than the shear forces which occur.

2. Process according to Claim 1, **characterized in that** the glass panes are bent as far as the membrane stress range.

3. Process according to Claim 1 or Claim 2, **characterized in that** the gap between the glass panes is filled with the plastic before or after the cold bending.

4. Process according to one of the preceding claims, **characterized in that** the plastic used is a casting resin.

5. Process according to one of the preceding claims, **characterized in that** reinforcing fibres are inserted into the plastic layer.

6. Process according to one of the preceding claims, **characterized in that** toughened safety glass or chemically prestressed glass is used for the glass panes.

7. Process according to one of the preceding claims, **characterized in that**, in the case of laminated glass consisting of more than two glass panes, at least one gap is filled with a plastic which is tough in the cured state.

8. Process according to one of the preceding claims, **characterized in that** the at least two glass panes are separated from one another by an elastoplastic spacer (TPS).

## Revendications

1. Procédé de fabrication de verre feuilleté à cintrage définitif composé d'au moins deux plaques de verre, ces deux dernières n'étant pas en contact direct, l'espace entre elles ainsi formé étant rempli d'une matière synthétique liquide transparente en guise de couche de liaison avec ensuite un durcissement de la matière synthétique, **caractérisé en ce que** les plaques de verre sont cintrées à froid et **en ce que** la matière synthétique utilisée est, à l'état durci, résistante au cisaillement et présente une adhérence au verre plus importante que les forces de cisaillement engendrées.

2. Procédé selon la revendication 1, **caractérisé en ce que** les plaques de verre sont cintrées jusque dans la zone de tension de la membrane.

3. Procédé selon la revendication 1 ou 2, **caractérisé en ce que** le remplissage de l'espace entre les plaques de verre par la matière synthétique s'effectue avant ou après le cintrage à froid.

4. Procédé selon l'une des revendications précédentes, **caractérisé en ce que** la matière synthétique utilisée est une résine à couler.

5. Procédé selon l'une des revendications précédentes, **caractérisé en ce que** des fibres de renforcement sont intégrées à la couche de matière synthétique.

6. Procédé selon l'une des revendications précédentes, **caractérisé en ce que** le verre utilisé pour les plaques de verre est du verre de sécurité trempé ou du verre trempé chimiquement.

7. Procédé selon l'une des revendications précédentes, **caractérisé en ce que**, dans le cas de verre trempé de plus de deux plaques de verre, un espace au moins est rempli d'une matière synthétique visqueuse à l'état durci.

8. Procédé selon l'une des revendications précédentes, **caractérisé en ce que** deux plaques de verre au moins sont séparées entre elles par un écarteur élastoplastique (TPS).
